# EUROPEAN PATENT SPECIFICATION

(11) **EP 1 549 153 B1**
(45) Date of publication and mention of the grant of the patent: **05.12.2012**
(21) Application number: 02779229.0
(22) Date of filing: 24.09.2002
(51) Int. Cl.: A23G 3/36

(54) **CHEWING GUM HAVING IMPROVED RELEASE OF CHEWING GUM INGREDIENTS**
KAUGUMMI MIT VERBESSERTER ABGABE VON KAUGUMMIINHALTSSTOFFEN
GOMME À MÂCHER PRÉSENTANT UNE LIBÉRATION AMÉLIORÉE DE SES INGRÉDIENTS

(43) Date of publication of application: 06.07.2005
(73) Proprietor: Gumlink A/S, 7100 Vejle (DK)
(72) Inventor: ANDERSEN, Lone, DK-5500 Middelfart (DK); WITTORF, Helle, DK-7120 Vejle o (DK)
(74) Representative: Olesen, Kaj
(86) International application number: PCT/DK2002/000626
(87) International publication number: WO 2004/028267

(56) References cited:
- EP-A- 0 711 506
- WO-A-00/25598
- WO-A-01/47368
- WO-A1-02/076227
- WO-A1-2004/002236
- PATENT ABSTRACTS OF JAPAN vol. 1999, no. 06, 31 March 1999 (1999-03-31) & JP 08 196214 A (RIJKSUNIV TE GRONINGEN), 6 August 1996 (1996-08-06)

## Description

### Field of the invention

The present invention relates to a chewing gum having an improved release of chewing gum ingredients.

### Background of the invention

A lot of research and efforts have been put into improvement of chewing gum for the purpose of obtaining an improved release of chewing gum ingredients.

Chewing gum ingredients may for example comprise bulk sweeteners, high intensity sweeteners, flavoring agents, softeners, emulsifiers, coloring agents, binding agents, acidulants, fillers, antioxidants and other components such as pharmaceutically or biologically active substances, conferring desired properties to the finished chewing gum product.

A relatively important chewing gum ingredient is for example the flavor agents, which, even though applied in relatively small amount, are relatively expensive and form a significant part of the manufacturing costs.

Typically, if a significant initial release is desired, different approaches are applied. One of those may for example be to compress a mixture of chewing gum ingredients and chewing gum base granulates into a final tablet. The compressed tablet features a quite impressive initial release due to the fact that conventional mixing is avoided.

One reason to avoid the conventional mixing of chewing gum contrary to compression is that the chewing gum ingredients are quite vulnerable to pressure and high temperatures typically applied during the mixing.

A significant disadvantage of compressed chewing gum is however typically that the initial texture lacks for instance softness when compared to that of conventionally mixed chewing gum. This is due to the relatively fragile structure of compressed chewing gum

EP 0 711 506 discloses a biodegradable chewing gum comprising one or more conventional chewing gum components and as gum base at least one biodegradable polymer selected from the group of polyesters and polycarbonates.

WO 01/47368 discloses chewing gum comprising a biodegradable copolymer of 500 to 100,000 number average molecular weight (Mn).

It is the object of the invention to provide a chewing gum having an improved initial release of chewing gum ingredients in combination with an acceptable initial texture.

### Summary of the invention

The invention relates to chewing gum comprising at least one biodegradable polyester copolymer obtained by the polymerization of two or more cyclic esters by ring-opening, said at least one biodegradable polyester copolymer having a molecular weight of less than 150000 g/mol (Mn) and said chewing gum further comprising chewing gum ingredients, wherein the chewing gum is free of non-biodegradable polymers.

According to the invention, an improved release of chewing gum ingredients has been obtained when a texture acceptable biodegradable polyester copolymer is applied as a chewing gum polymer.

It has moreover been demonstrated that the release of ingredients may be adjusted by variation of the molecular weight of the applied biodegradable polymer or polymers. Moreover, it has also been established, that adding of polymers having a certain predetermined ingredient release profile may in fact modify the final complete chewing gum release profile.

More particularly, according to the invention, an improved initial release has been obtained with respect to chewing gum ingredients.

Active ingredients includes according to the terms of the invention among others flavor ingredients and for example medical active ingredients.

According to the invention it has been realized that flavor release of especially water soluble flavors may be significantly improved or modified when applying degradable polymers.

According to the invention, it has been realized that low molecular weight biodegradable polymers, that is a molecular weight of less than 150000 g/mol in this context, preferably less than 125000 g/mol Mn, facilitate an increased initial release.

Moreover, according to the invention, it has been realized, that the improved initial release is increased with lower molecular weight.

According to the invention, an increased initial release is obtained in combination with an improved initial softness.

According to the invention, it has, most surprisingly, been found that both water soluble and water insoluble chewing gum ingredients features an improved initial release.

In an embodiment of the invention the at least one biodegradable polyester copolymer having a molecular weight of less than 150000 g/mol results in an improved initial release in the resulting chewing gum.

In an embodiment of the invention, said at least one biodegradable polymer has a molecular weight of less than 125000 g/mol.

In an embodiment of the invention said at least one biodegradable polyester copolymer having a molecular weight of less than 10000 g/mol.

In an embodiment of the invention said at least one biodegradable polyester copolymer has a molecular weight of less than 6000 g/mol Mn.

In an embodiment of the invention said chewing gum comprises at least two different biodegradable polyester copolymers.

According to the invention, it has been obtained that a resulting release profile may in fact be obtained by combination of different biodegradable polymers having different release profiles.

In an embodiment of the invention said chewing gum ingredients comprise flavoring agents.

In an embodiment of the invention said flavoring agents comprise natural and synthetic flavourings in the form of natural vegetable components, essential oils, essences, extracts, powders, including acids and other substances capable of affecting the taste profile

In an embodiment of the invention said chewing gum comprises flavor in an amount of 0.01 to about 30 wt %, said percentage being based on the total weight of the chewing gum

In an embodiment of the invention said chewing gum comprises flavor in an amount of 0.2 to about 4 wt %, said percentage being based on the total weight of the chewing gum.

In an embodiment of the invention said flavor comprises water soluble ingredients.

In an embodiment of the invention said water soluble flavor comprises acids.

In an embodiment of the invention said flavor comprises water insoluble ingredients.

In an embodiment of the invention, said chewing gum ingredients comprises sweeteners.

In an embodiment of the invention said sweetener comprises bulk sweeteners

In an embodiment of the invention the chewing gum comprises bulk sweeteners in an amount of about 5 to about 95% by weight of the chewing gum, more typically about 20 to about 80% by weight of the chewing gum.

In an embodiment of the invention the sweetener comprises high intensity sweeteners.

In an embodiment of the invention the high intensity sweeteners comprise sucralose, aspartame, salts of acesulfame, alitame, saccharin and its salts, cyclamic acid and its salts, glycyrrhizin, dihydrochalcones, thaumatin, monellin, sterioside, alone or in combination.

In an embodiment of the invention wherein the chewing gum comprises high intensity sweeteners in an amount of about 0 to about 1% by weight of the chewing gum, more typically about 0.05 to about 0.5 % by weight of the chewing gum.

In an embodiment of the invention, the chewing gum comprises at least one softener.

In an embodiment of the invention, the at least one softener comprises tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids - such as stearic, palmitic, oleic and linoleic acids mixtures thereof.

In an embodiment of the invention the chewing gum comprises softeners in an amount of about 0 to about 18% by weight of the chewing gum, more typically about 0 to about 12 % by weight of the chewing gum.

In an embodiment of the invention, the chewing gum ingredients comprise active ingredients.

In an embodiment of the invention, said active ingredients are selected from the group of: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminium salts, Calcium salts, Ferro salts, Silver salts, Zinc-salte, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B 12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and/or Ratinidine or derivates and mixtures thereof.

In an embodiment of the invention the at least two or more cyclic esters are selected from the groups of glycolides, lactides, lactones, cyclic carbonates or mixtures thereof.

In an embodiment of the invention the lactone monomers are chosen from the group of ε-caprolactone, δ-valerolactone, γ-butyrolactone, and β-propiolactone. It also includes ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom and mixtures thereof.

In an embodiment of the invention the carbonate monomer is selected from the group of trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

In an embodiment of the invention the cyclic ester polymers and their copolymers resulting from the polymerization of cyclic ester monomers include, but are not limited to : poly (L-lactide); poly (D-lactide) ; poly (D, L-lactide) ; poly (mesolactide) ; poly (glycolide) ; poly (trimethylenecarbonate) ; poly (epsilon-caprolactone) ; poly (L-lactide-co-D, L-lactide) ; poly (L-lactide-co-meso-lactide) ; poly (L-lactide-co-glycolide) ; poly (L-lactide-co-trimethylenecarbonate) ; poly (L-lactide-co-epsilon-caprolactone) ; poly (D, L-lactide-co-meso-lactide) ; poly (D, L lactide-co-glycolide) ; poly (D, L-lactide-co-trimethylenecarbonate) ; poly (D, L-lactide-co-epsilon-caprolactone) ; poly (meso-lactide-co-glycolide) ; poly (meso-lactide-co-trimethylenecarbonate) ; poly (meso-lactide-co-epsilon-caprolactone) ; poly (glycolide-cotrimethylenecarbonate) ; poly (glycolide-co-epsilon-caprolactone).

In an embodiment of the invention the chewing gum comprises filler.

A chewing gum base formulation may, if desired, include one or more fillers/texturisers including as examples, magnesium and calcium carbonate, sodium sulphate, ground limestone, silicate compounds such as magnesium and aluminium silicate, kaolin and clay, aluminium oxide, silicium oxide, talc, titanium oxide, mono-, di- and tri-calcium phosphates, cellulose polymers, such as wood, and combinations thereof.

In an embodiment of the invention the chewing gum comprises filler in the amount of about 0 to about 50% by weight of the chewing gum, more typically about 10 to about 40 % by weight of the chewing gum.

In an embodiment of the invention the chewing gum comprises at least one coloring agent.

According to an embodiment of the invention, the chewing gum may comprise color agents and whiteners such as FD&C-type dyes and lakes, fruit and vegetable extracts, titanium dioxide and combinations thereof. Further useful chewing gum base components include antioxidants, e.g. butylated hydroxytoluene (BHT), butyl hydroxyanisol (BHA), propylgallate and tocopherols, and preservatives.

In the present context, chewing gum ingredients may for example comprise bulk sweeteners, high intensity sweeteners, flavouring agents, softeners, emulsifiers, colouring agents, binding agents, acidulants, fillers, antioxidants and other components such as pharmaceutically or biologically active substances, conferring desired properties to the finished chewing gum product.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High intensity artificial sweetening agents can also be used alone or in combination with the above sweeteners. Preferred high intensity sweeteners include, but are not limited to sucralose, aspartame, salts of acesulfame, alitame, saccharin and its salts, cyclamic acid and its salts, glycyrrhizin, dihydrochalcones, thaumatin, monellin, sterioside and the like, alone or in combination. In order to provide longer lasting sweetness and flavour perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fibre extrusion may be used to achieve desired release characteristics. Encapsulation of sweetening agents can also be provided using another chewing gum components such as a resinous compound.

Usage level of the artificial sweetener will vary considerably and will depend on factors such as potency of the sweetener, rate of release, desired sweetness of the product, level and type of flavour used and cost considerations. Thus, the active level of artificial sweetener may vary from about 0.02 to about 8% by weight. When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as with aqueous sugar or alditol solutions.

If a low calorie gum is desired, a low caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low calorie-bulking agents can be used.

Further chewing gum ingredients which may be included in the chewing gum according to the present invention include surfactants and/or solubilisers, especially when pharmaceutically or biologically active ingredients are present. As examples of types of surfactants to be used as solubilisers in a chewing gum composition according to the invention reference is made to H.P. Fiedler, Lexikon der Hilfstoffe für Pharmacie, Kosmetik und Angrenzende Gebiete, page 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient the chewing gum may preferably also comprise a carrier known in the art.

The chewing gum according to the present invention may contain aroma agents and flavouring agents including natural and synthetic flavourings e.g. in the form of natural vegetable components, essential oils, essences, extracts, powders, including acids and other substances capable of affecting the taste profile. Examples of liquid and powdered flavourings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavour may be a natural flavouring agent which is freeze-dried, preferably in the form of a powder, slices or pieces or combinations thereof. The particle size may be less than 3 mm, less than 2 mm or more preferred less than 1 mm, calculated as the longest dimension of the particle. The natural flavouring agent may in a form where the particle size is from about 3 µm to 2 mm, such as from 4 µm to 1 mm. Preferred natural flavouring agents include seeds from fruit e.g. from strawberry, blackberry and raspberry.

Various synthetic flavours, such as mixed fruit flavours may also be used in the present chewing gum centres. As indicated above, the aroma agent may be used in quantities smaller than those conventionally used. The aroma agents and/or flavours may be used in the amount of from 0.01 to about 30% by weight of the final product depending on the desired intensity of the aroma and/or flavour used. Preferably, the content of aroma/flavour is in the range of 0.2 to 3% by weight of the total composition.

In one embodiment the chewing gum according to the invention comprises a pharmaceutically, cosmetically or biologically active substance. Examples of such active substances, a comprehensive list of which is found e.g. in WO 00/25598, which is incorporated herein by reference, include drugs, dietary supplements, antiseptic agents, pH adjusting agents, anti-smoking agents and substances for the care or treatment of the oral cavity and the teeth such as hydrogen peroxide and compounds capable of releasing urea during chewing. Examples of useful active substances in the form of antiseptics include salts and derivatives of guanidine and biguanidine (for instance chlorhexidine diacetate) and the following types of substances with limited water-solubility: quaternary ammonium compounds (e.g. ceramine, chloroxylenol, crystal violet, chloramine), aldehydes (e.g. paraformaldehyde), derivatives of dequaline, polynoxyline, phenols (e.g. thymol, p-chlorophenol, cresol), hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. also Martindale, The Extra Pharmacopoeia, 28th edition, page 547-578; metal salts, complexes and compounds with limited water-solubility, such as aluminium salts, (for instance aluminium potassium sulphate AlK(SO₄)₂,12H₂O) and salts, complexes and compounds of boron, barium, strontium, iron, calcium, zinc, (zinc acetate, zinc chloride, zinc gluconate), copper (copper chloride, copper sulphate), lead, silver, magnesium, sodium, potassium, lithium, molybdenum, vanadium should be included; other compositions for the care of mouth and teeth: for instance salts, complexes and compounds containing fluorine (such as sodium fluoride, sodium monofluorophosphate, aminofluorides, stannous fluoride), phosphates, carbonates and selenium. Further active substances can be found in J. Dent.Res. Vol. 28 No. 2, page 160-171,1949.

Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

Active ingredients may comprise the below mentioned compounds or derivates thereof but are not limited thereto: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminium salts, Calcium salts, Ferro salts, Silver salts, Zinc-salte, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and or Ratinidine.

The gum centre of a chewing gum according to the invention can have any form, shape or dimension that permits the chewing gum centre to be coated using any conventional coating process. Accordingly, the gum centre may be e.g. in a form selected from a pellet, a cushion-shaped pellet, a stick, a tablet, a chunk, a pastille, a pill, a ball and a sphere.

Moreover, the chewing gum may advantageously be coated applying for example film-coating, soft or hard-coating.

embodiment of the invention said chewing gum comprises
at least one biodegradable elastomer in the amount of about 0.5 to about 70% wt of the chewing gum,
at least one biodegradable plasticizer in the amount of about 0.5 to about 70% wt of the chewing gum and
at least one chewing gum ingredient chosen from the groups of softeners, sweeteners, flavoring agents, active ingredients and fillers in the amount of about 2 to about 80% wt of the chewing gum.

In accordance with the invention, the chewing gum base components which are useful may include one or more resin compounds contributing to obtain the desired masticatory properties and acting as plasticizers for the elastomers of the gum base composition. In the present context, useful elastomer plasticizers include synthetic resins such as polyvinyl acetate (PVAc) having a GPC average molecular weight in the range of 2,000 to about 90,000 such as the range of 3,000 to 80,000, and natural resins such as natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins, pentaerythritol esters of rosins. Other useful resinous compounds include synthetic resins such as terpene resins derived from alpha-pinene, beta-pinene, and/or d-limonene, natural terpene resins; and any suitable combinations of the foregoing. The preferred elastomer plasticizers will also vary depending on the specific application, and on the type of elastomer(s) being used. Only biodegrable polymers may be used in the invention.

A chewing gum base formulation may, if desired, include one or more fillers/texturisers including as examples, magnesium and calcium carbonate, sodium sulphate, ground limestone, silicate compounds such as magnesium and aluminium silicate, kaolin and clay, aluminium oxide, silicium oxide, talc, titanium oxide, mono-, di- and tri-calcium phosphates, cellulose polymers, such as wood, and combinations thereof.

The fillers/texturisers may also include natural organic fibres such as fruit vegetable fibres, grain, rice, cellulose and combinations thereof.

A gum base formulation may, in accordance with the present invention, comprise one or more softening agents e.g. sucrose polyesters including those disclosed in WO 00/25598, which is incorporated herein by reference, tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof. As used herein the term "softener" designates an ingredient, which softens the gum base or chewing gum formulation and encompasses waxes, fats, oils, emulsifiers, surfactants and solubilisers.

To soften the gum base further and to provide it with water binding properties, which confer to the gum base a pleasant smooth surface and reduce its adhesive properties, one or more emulsifiers is/are usually added to the composition, typically in an amount of 0 to 18% by weight, preferably 0 to 12% weight of the gum base. Mono-and diglycerides of edible fatty acids, lactic acid esters and acetic acid esters of mono- and diglycerides of edible fatty acids, acetylated mono and diglycerides, sugar esters of edible fatty acids, Na-, K-, Mg- and Ca-stearates, lecithin, hydroxylated lecithin and the like are examples of conventionally used emulsifiers which can be added to the chewing gum base. In case of the presence of a biologically or pharmaceutically active ingredient as defined below, the formulation may comprise certain specific emulsifiers and/or solubilisers in order to disperse and release the active ingredient.

Waxes and fats are conventionally used for the adjustment of the consistency and for softening of the chewing gum base when preparing chewing gum bases. In connection with the present invention any conventionally used and suitable type of wax and fat may be used, such as for instance rice bran wax, polyethylene wax, petroleum wax (refined paraffin and microcrystalline wax), paraffin, bees' wax, carnauba wax, candelilla wax, cocoa butter, degreased cocoa powder and any suitable oil or fat, as e.g. completely or partially hydrogenated vegetable oils or completely or partially hydrogenated animal fats.
In an embodiment the gum base is wax-free.

Furthermore, the gum base formulation may, in accordance with the present invention, comprise colourants and whiteners such as FD&C-type dyes and lakes, fruit and vegetable extracts, titanium dioxide and combinations thereof. Further useful chewing gum base components include antioxidants, e.g. butylated hydroxytoluene (BHT), butyl hydroxyanisol (BHA), propylgallate and tocopherols, and preservatives.

The composition of chewing gum base formulations which are admixed with chewing gum additives as defined below can vary substantially depending on the particular product to be prepared and on the desired masticatory and other sensory characteristics of the final product. However, typical ranges (weight%) of the above gum base components are: 5 to 50% by weight elastomeric compounds, 5 to 55% by weight elastomer plasticizers, 0 to 50% by weight filler/texturiser, 5 to 35% by weight softener and 0 to 1% by weight of miscellaneous ingredients such as antioxidants, colourants, etc.

Different suitable cyclic ester monomers applicable for the polymerization of biodegradable polyester copolymer applied in the chewing gum according to the invention are listed below.

In an embodiment of the invention the lactone monomers are chosen from the group of ε-caprolactone, δ-valerolactone, γ-butyrolactone, and β-propiolactone. It also includes ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom.

Examples of the lactones described above are, but not limited to, -caprolactone, t-butyl caprolactone, zeta-enantholactone, deltavalerolactones, the monoalkyl-deltavalerolactones, e. g. the monomethyl-, monoethyl-, monohexyl-deltavalerolactones, and the like ; the nonalkyl, dialkyl, and trialkyl-epsilon-caprolactones, e. g. the monomethyl-, monoethyl-, monohexyl-, dimethyl-, di-n-propyl-, di-nhexyl-, trimethyl-, triethyl-, tri-n-epsilon-caprolactones, 5-nonyloxepan-2-one, 4,4,6- or 4, 6, 6-trimethyl-oxepan-2-one, 5-hydroxymethyloxepan-2-one, and the like ; beta-lactones, e. g., beta-propiolactone, beta-butyrolactone gamma-lactones, e. g., gammabutyrolactone or pivalolactone, dilactones, e. g. lactide, dilactides, glycolides, e. g., tetramethyl glycolides, and the like, ketodioxanones, e. g. 1,4-dioxan-2one, 1, 5-dioxepan-2-one, and the like. The lactones can consist of the optically pure isomers or two or more optically different isomers or can consist of mixtures of isomers.

Preferably the carbonate monomer is selected from the group of trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one.

Examples of suitable cyclic carbonates are ethylene carbonate, 3-ethyl-3-hydroxymethyl trimethylene carbonate, propylene carbonate, trimethylene carbonate, trimethylolpropane monocarbonate, 4,6dimethyl-1, 3-propylene carbonate, 2, 2-dimethyl trimethylene carbonate, and 1, 3-dioxepan-2-one and mixtures thereof.

According to the invention several different carboner monomers may be applied. The preferred carbonate monomer is trimethylene carbonate (TMC).

In an embodiment of the invention edible polyesters may be applied as a degradable chewing gum polymer.

Edible polyesters are obtained by esterification of at least one alcohol and one acid.

The edible polyester is produced by condensation polymerization reaction of at least one alcohol chosen from the group of trihydroxyl alcohol and dihydroxyl alcohol, and at least one acid chosen from the group consisting of dicarboxylic acid and tricarboxylic acid.

It is possible to use edible or food grade materials. Because the starting acids and alcohols are food grade materials the resultant polymers is edible.

| | |
|---|---|
| Alcohols: | Glycerol, propylene glycol, 1,3 butylene diol |
| Acids: | Citric acid, fumaric acid, adipic acid, malic acid, succinic acid, suberic acid, sebacic acid, dodecanedioic acid, glucaric acid, glutamic acid, glutaric, azelaic acid, tartaric acid |

Edible polyesters can replace both elastomers and elastomer plasticizers and form 1-80% of the gum base.

### The drawings

The invention will now be described in further details in the following, non-limiting examples and figures wherein
- fig.1-10: illustrate the release of taste ingredients of chewing gum according to the invention,
- fig. 11 and 12: illustrate the release of active ingredients in a chewing gum according to the invention and where
- fig. 13 and 14: illustrate the texture of chewing gums according to the invention

### Detailed description

In the present context the terms environmentally or biologically degradable polymer compounds refers to chewing gum base components which, after dumping the chewing gum, is capable of undergoing a physical, chemical and/or biological degradation whereby the dumped chewing gum waste becomes more readily removable from the site of dumping or is eventually disintegrated to lumps or particles which are no longer recognizable as being chewing gum remnants. The degradation or disintegration of such degradable polymers can be effected or induced by physical factors such as temperature, light, moisture, by chemical factors such as hydrolysis caused by a change in pH or by the action of enzymes capable of degrading the polymers. In other useful embodiments all of the polymer components of the gum base are environmentally degradable or biodegradable polymers.

Preferably, the ultimate degradation products are carbon dioxide, methane and water.

According to a preferred definition of biodegradability according to the invention biodegradability is a property of certain organic molecules whereby, when exposed to the natural environment or placed within a living organism, they react through an enzymatic or microbial process, often in combination with a pure chemical process such as hydrolysis, to form simpler compounds, and ultimately, carbon dioxide, nitrogen oxides, and water.

Accordingly, suitable examples of additional environmentally or biologically degradable chewing gum base polymers which can be applied in accordance with the gum base of the present invention include degradable polyesters, polycarbonates, polyester amides, polypeptides, homopolymers of amino acids such as polylysine, and proteins including derivatives hereof such as e.g. protein hydrolysates including a zein hydrolysate. Particularly useful compounds of this type include polyester polymers obtained by the polymerisation of one or more cyclic esters such as lactide, glycolide, trimethylene carbonate, δ-valerolactone, β-propiolactone and ε-caprolactone. Such degradable polymers may be homopolymers or copolymers, including block-polymers.

Unless otherwise indicated, as used herein, the term "molecular weight" means number average molecular weight (Mn).

### EXAMPLE 1

### Preparation of resin

A resin sample was produced using a cylindrical glass, jacketed 10 L pilot reactor equipped with glass stir shaft and Teflon stir blades and bottom outlet. Heating of the reactor contents was accomplished by circulation of silicone oil, thermostated to 130°C, through the outer jacket. D,L-lactide (4.877 kg, 33.84 mol) was charged to the reactor and melted by heating to 140°C for 6 h. After the D,L-lactide was completely molten, the temperature was reduced to 130°C, and stannous octoate (1.79 g, 4.42 x 10⁻³ mol), 1,2-propylene glycol (79.87 g, 1.050 mol), and ε-caprolactone (290.76 g, 2.547 mol) were charged to the reactor. After the mixture became homogeneous, stirring was continued for 24 h at 130°C. At the end of this time, the bottom outlet was opened, and molten polymer was allowed to drain into a Teflon-lined paint can.

Characterization of the product indicated Mₙ = 5,700 g/mol and M_{w} = 7,100 g/mol (gel permeation chromatography with online MALLS detector) and Tg = 30.7°C (DSC, heating rate 10°C/min).

### EXAMPLE 2a

### Preparation of LMWE elastomer

A LMWE sample was synthesized within a dry N₂ glove box, as follows. Into a 500 mL resin kettle equipped with overhead mechanical stirrer, 0.40 g 1,2-propane diol (1.82 mL of a 22.0 % (w/v) solution in MeCl₂), and 0.094 g Sn(Oct)₂ (2.2 mL of a 4.27 % (w/v) solution of in MeCl₂) were charged under dry N₂ gas purge. The MeCl₂ was allowed to evaporate under the N₂ purge for 15 min. Then ε-caprolactone (170 g, 1.49 mol), TMC (76g, 0.74 mol), and δ-valerolactone (74 g, 0.74 mol) were added. The resin kettle was submerged in a 130°C constant-temperature oil bath and stirred for 14 h. Subsequently the kettle was removed from the oil bath and allowed to cool to room temperature.

Characterization of the product indicated Mₙ = 57,960 g/mol and M_{w} = 85,910 g/mol (gel permeation chromatography with online MALLS detector) and Tg = - 59.8°C (DSC, heating rate 10°C/min).

### EXAMPLE 2b

### Preparation of LMWE elastomer

A LMWE sample was synthesized within a dry N₂ glove box, as follows. Into a 500 mL resin kettle equipped with overhead mechanical stirrer, 0.73 g 1,2-propane diol (3.3mL of a 22.0%(w/v) solution in methylene chloride), and 0.152 g Sn(Oct)₂ (3.56 ml of a 4.27% (w/v) solution in methylene chloride) were charged under dry N₂ gas purge. The methylene chloride was allowed to evaporate under the N₂ purge for 15 min. Then ε-caprolactone (300g, 2.63 mol) and δ-valerolactone (215 gm, 2.15 mol) were added. The resin kettle was submerged in a 130°C constant temperature oil bath and stirred for 14 h. Subsequently the kettle was removed from the oil bath and allowed to cool at room temperature.

Characterization of the product indicated Mₙ = 59,870 g/mol and M_{w} = 74,220 g/mol (gel permeation chromatography with online MALLS detector).

### EXAMPLE 3

### Preparation of HMWE

A HMWE sample was synthesized in a dry N₂ glove box, as follows. Into a 500 mL resin kettle equipped with overhead mechanical stirrer was charged 0.037 g Sn(Oct)₂ (2.4 ml of a 1.54% (w/v) solution in methylene chloride) under dry N₂ gas purge. The methylene chloride was allowed to evaporate under the N₂ purge for 15 min. Then, pentaerythritol (0.068 g, 4.99 x 10⁻⁴ mol), ε-caprolactone (68.0g, 0.596 mol), TMC (7.0 g, 0.069 mol), and δ-valerolactone (33.0 g, 0.33 mol) were added. The resin kettle was then submerged in a 130°C constant-temperature oil bath and stirred for about 2 - 2.5 h, at which time the mass solidified and could no longer be stirred. The reacting mass was then maintained at 130°C for an additional 11.5-12 h for a total reaction time of 14 h. Subsequently the kettle was removed from the oil bath and allowed to cool to room temperature..

Characterization of the product indicated Mₙ = 113,900 g/mol and M_{w} = 369,950 g/mol (gel permeation chromatography with online MALLS detector).

### EXAMPLE 4

### Preparation of gum bases

All the gum bases are prepared with following basic formulation:

| Ingredients | | Percent by weight |
|---|---|---|
| Elastomer HMWE | (Polymer 1) | 20 |
| Elastomer LMWE | (Polymer 2) | 40 |
| Resin | (Polymer 3) | 40 |

The gum bases are prepared as follows:
HMWE elastomer is added to a mixing kettle provided with mixing means like e.g. horizontally placed Z-shaped arms. The kettle had been preheated for 15 minutes to a temperature of about 60-80°C. The rubber is broken into small pieces and softened with mechanical action on the kettle.

The resin is slowly added to the elastomer until the mixture becomes homogeneous. The remaining resin is then added to the kettle and mixed for 10-20 minutes. The LMWE elastomer is added and mixed for 20-40 minutes until the whole mixture becomes homogeneous.

The mixture is then discharged into the pan and allowed to cool to room temperature from the discharged temperature of 60-80°C, or the gumbase mixture is used directly for chewing gum by adding all chewing gum components in an appropriate order under continuous mixing.

### EXAMPLE 5

### Preparation of Chewing gum

All chewing gum formulations are prepared with the following basic formulation

| Ingredients | Percent by weight (Mint formulation) | Percent by weight (Strawberry formulation) |
|---|---|---|
| Gum base | 40 | 40 |
| Sorbitol | 48.6 | 48,6 |
| Lycasin | 3 | 3 |
| Peppermint oil | 1.5 | - |
| Menthol crystals | 0.5 | - |
| Strawberry | - | 2 |
| Aspartame | 0.2 | 0.2 |
| Acesulfame | 0.2 | 0.2 |
| Xylitol | 6 | 6 |

The chewing gum products are prepared as follows:

The gum base is added to a mixing kettle provided with mixing means like e.g. horizontally placed Z-shaped arms. The kettle had been preheated for 15 minutes to a temperature of about 60-80°C. Or the mixing step is continued directly from the gum base preparation i.e. in a one step operation. The mixing process is preformed at a temperature between 60-80°C.

One third portion of the sorbitol is added together with the gum base and mixed for 1-2 minutes. Another one third portion of the sorbitol and lycasin are then added to the kettle and mixed for 2 minutes. The remaining one third portion of sorbitol, peppermint and menthol are added and mixed for 2 minutes. Then aspartame and acesulfame are added to the kettle and mixed for 3 minutes. Xylitol is added and mixed for 3 minutes. The resulting gum mixture is then discharged and e.g. transferred to a pan at a temperature of 40-48°C. The gum is then rolled and scored into cores, sticks, balls, cubes, and any other desired shape, optionally followed by coating and polishing processes prior to packaging.

### EXAMPLE 6-10

### Sensory profile of conventional and biodegradable chewing gum containing flavor.

| Ex | Gum base | Polymer 1 | Polymer 2 | Polymer 3 | Chewing gum |
|---|---|---|---|---|---|
| 6 | Standard | Butyl rubber | Polyisobutylene | Polyvinylacetate | Mint |
| | conventional gum base | Mn =117.000 | Mn =30.000 | Mn =5000 | |
| 7 | 100% biodegradable gum base | Elastomer according to example 3 | Elastomer according to example 2a | Polymer according to example 1 | Mint |
| 8 | Gum base based only on example 1 | - | - | Polymer according to example 1 | Mint |
| 9 | Gum base based only on example 2a | - | Elastomer according to example 2a | - | Mint |
| 10 | Gum base based only on example 3 | Elastomer according to example 3 | - | - | Mint |

| | | | | | |
|---|---|---|---|---|---|
| Mint refers to the formulations specified in example 5. | | | | | |

The five chewing gum samples were tested by serving them to the sensory panellists in tasting booths made in accordance with ISO 8598 standards at room temperature in 40 ml tasteless plastic cups with randomised 3-figure codes. Test samples were evaluated after chewing for 0-1 minutes (initial phase 1), 1-2 minutes (intermediate 1), 2-3 minutes (intermediate 2), 4-5 (end phase 1), respectively. Between each sample tested, the panellist were allowed a break of 3 minutes. Every test is repeated.

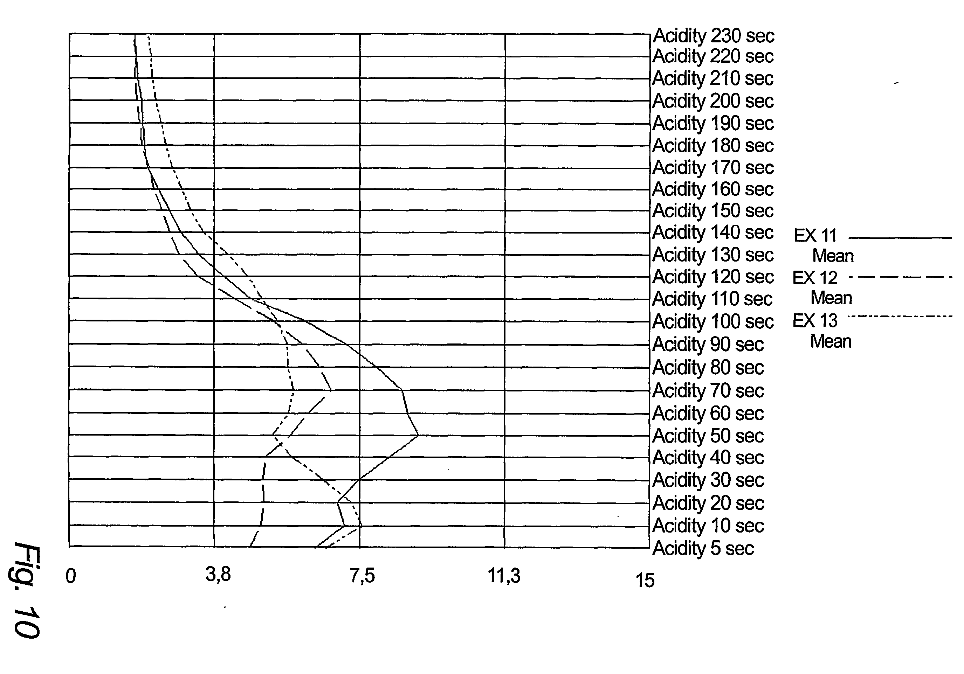

The following texture parameters were assessed: softness, toughness and elasticity. For each of these parameters, the panellists were required to provide their assessments according to an arbitrary scale of 0-15. The data obtained were processed using a FIZZ computer program (French Bio System) and the results were transformed to sensory profile diagrams as shown in figure 10-12. The major differences between test chewing gums in all phases were the following:

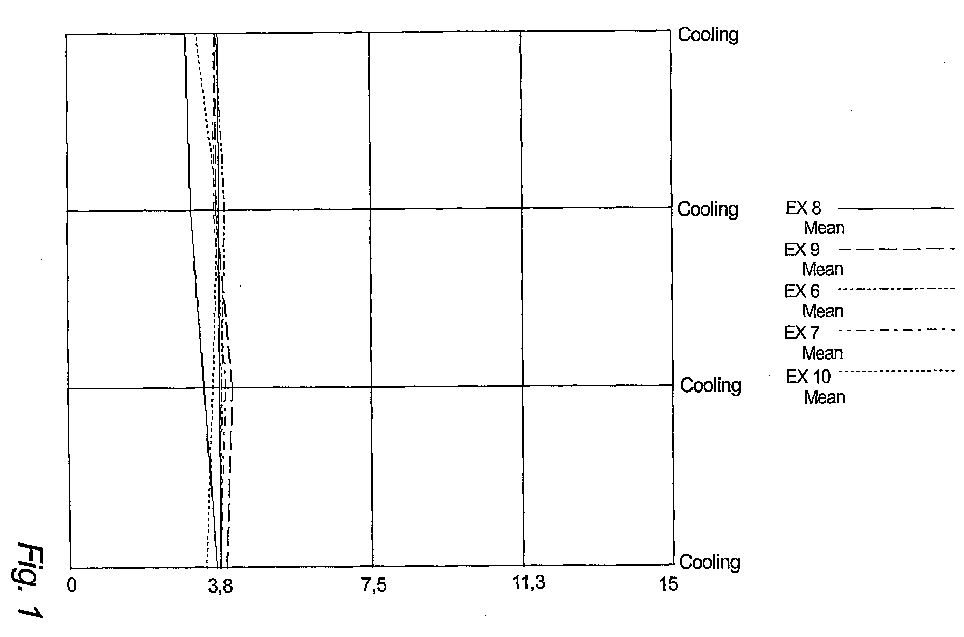

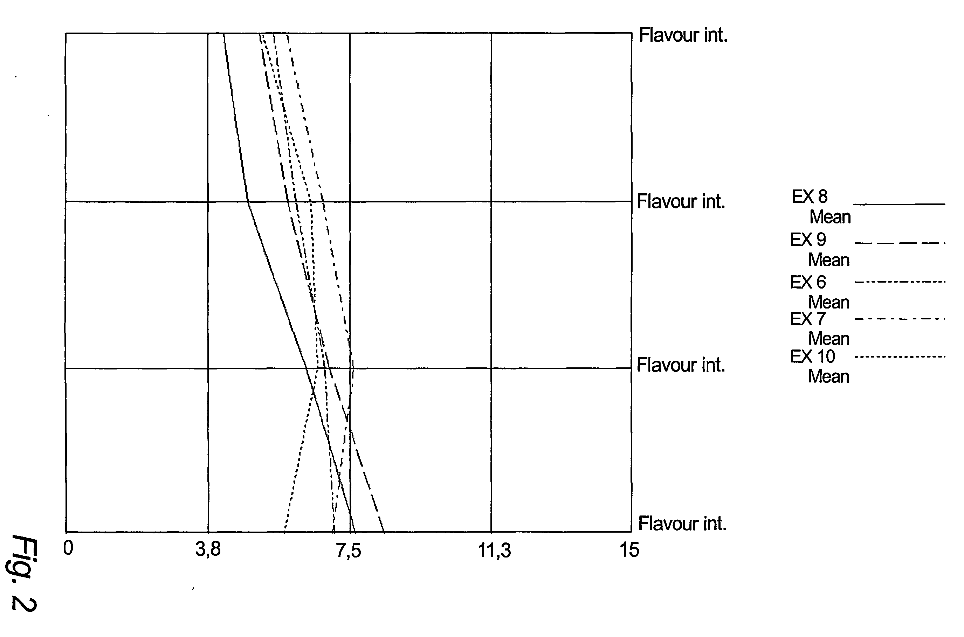

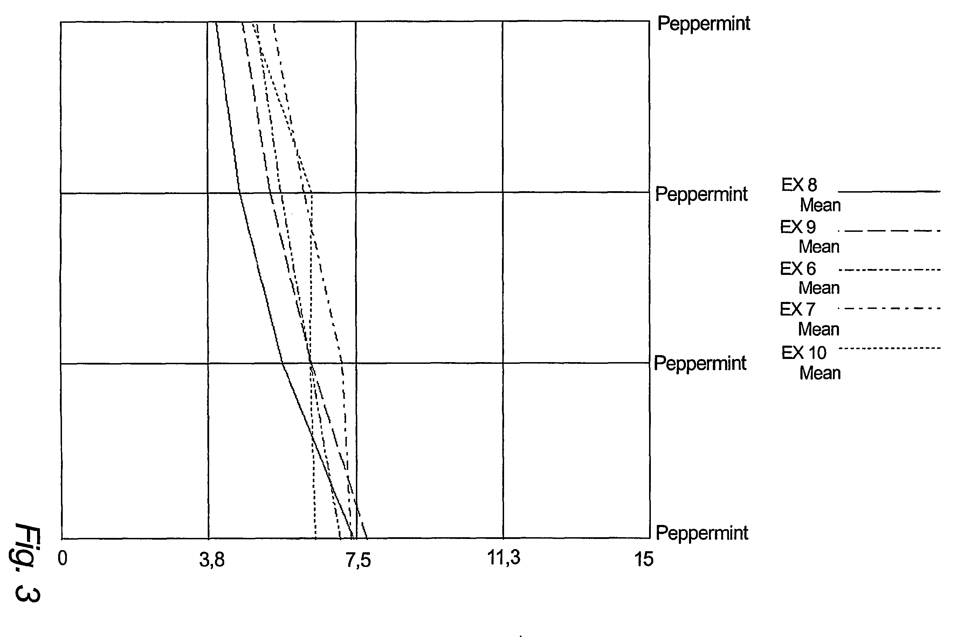

Figure 1-4 are illustrating the evaluation of release of the following taste parameters; peppermint, sweetness, flavor intensity and cooling.
Figure 1:
   No differences between the examples 6 to 10 can be observed. Both the conventional chewing gum of ex. 6 and the partly biodegradable chewing gum have very uniform cooling as a function of chewing gum.
Figure 2:
   Initially the ex. 8 and 9 are higher in flavor intensity compared to ex. 6,7 and 10. Example 8 and 9 are the low molecular weight polymers i.e. having lower viscosity resulting in faster flavor release due the increased mobility of the flavor components in the compound. Ex. 10 being the high molecular weight polymer i.e. having higher viscosity than all the other examples is having the slowest release.
   After 2 minutes of chewing gum the picture is changing as the flavor in the low molecular polymer is released from the system and the high molecular weight polymer takes the lead as it still has retained flavor for release in the system.
   The ex. 7 compared to ex. 6 is having a higher release at all chewing times (except up to 1 minute of chewing) indicating a synergetic effect of mixing all three biodegradable polymers.
Figure 3:
   Release of peppermint follows the flavor release profiles described according to figure 2.
Figure 4:
   The sweetness release profile compares in general with the release of flavor intensity and peppermint. However ex. 10 is having the peak value later than the other examples which is due to the very high viscosity of this sample making it difficult in the initial phase to incorporate the saliva into the gum base. However due to the more hydrophilic nature of the biodegradable polymers compared to the conventional gum base polymers, then the saliva when the polymer is softened, incorporates very fast resulting in high release of the sweetener.

Ex. 8 and 9 being the low viscosity polymers are showing instant high release of sweetener resulting from the initial softness and the hydrophilic nature of the polymers - hence a very low sweetness release after 2 minutes of chewing as all of the sweetener is released from the system.

As the uptake of saliva into the biodegradable gum base is faster compared to the conventional gum base polymer being more hydrophobic, the release of sweeteners in biodegradable systems are faster and more intense.

### EXAMPLE 11-14

### Sensory profile of conventional and biodegradable chewing gum containing flavor.

| Ex | Gum base | Polymer 1 | Polymer 2 | Polymer 3 | Chewing gum |
|---|---|---|---|---|---|
| 11 | Standard conventional gum base | Butyl rubber Mn =117.000 | Polyisobutylene Mn =30.000 | Polyvinylacetate Mn =5000 | Mint |
| 12 | Gum base based only on example 2a | Butyl rubber Mn =117.000 | Elastomer according to example 2a | Polyvinylacetate Mn =5000 | Mint |
| 13 | Gum base based only on example 1 | Butyl rubber Mn =117.000 | Polyisobutylene Mn =30.000 | Polymer according to example 1 | Mint |
| 14 | Gum base based only on example 1-2a | Butyl rubber Mn =117.000 | Elastomer according to example 2a | Polymer according to example 1 | Mint |

The four chewing gum samples were tested by serving them to the sensory panellists in tasting booths made in accordance with ISO 8598 standards at room temperature in 40 ml tasteless plastic cups with randomised 3-figure codes. Test samples were evaluated after chewing for 0-½ minutes (initial phase 1), ½-1 minutes (initial phase 2), 1-1½ minutes (intermediate 1),1½-2 minutes (intermediate 2), 2-2½ minutes (intermediate 3), 2½-3 minutes (intermediate 4), 3-3½ minutes (intermediate 5), 3½-4 minutes (intermediate 6), 4-4½ minutes (end phase 1), 4½-5 minutes (end phase 2), respectively. Between each sample tested, the panellist were allowed a break of 3 minutes. Every test is repeated.

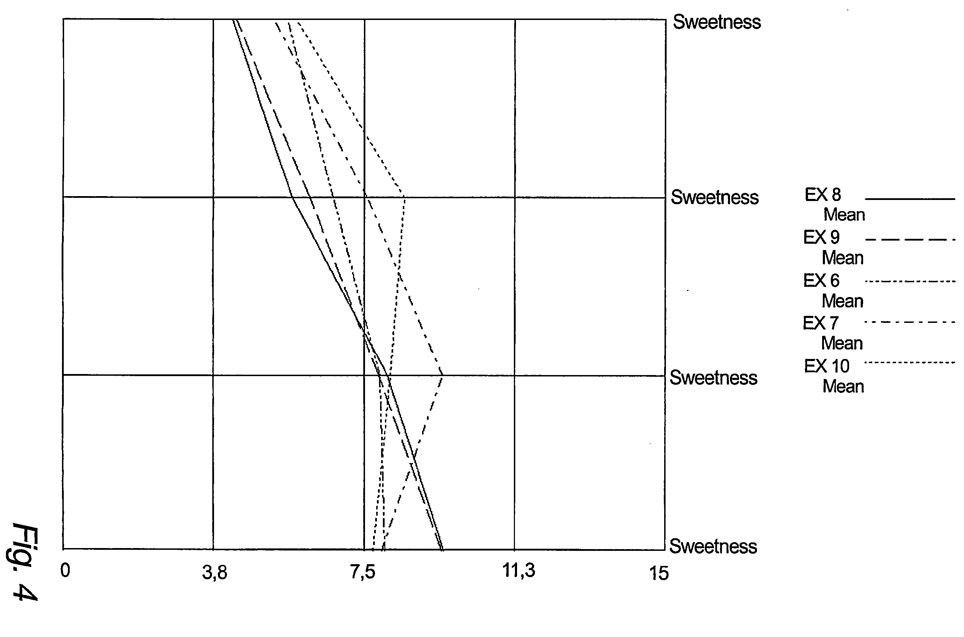

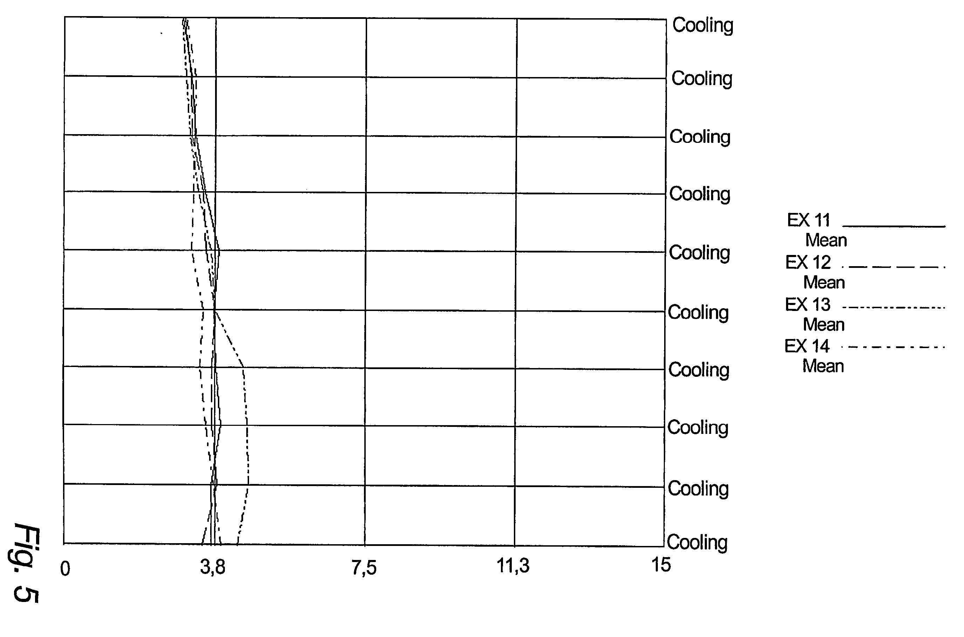

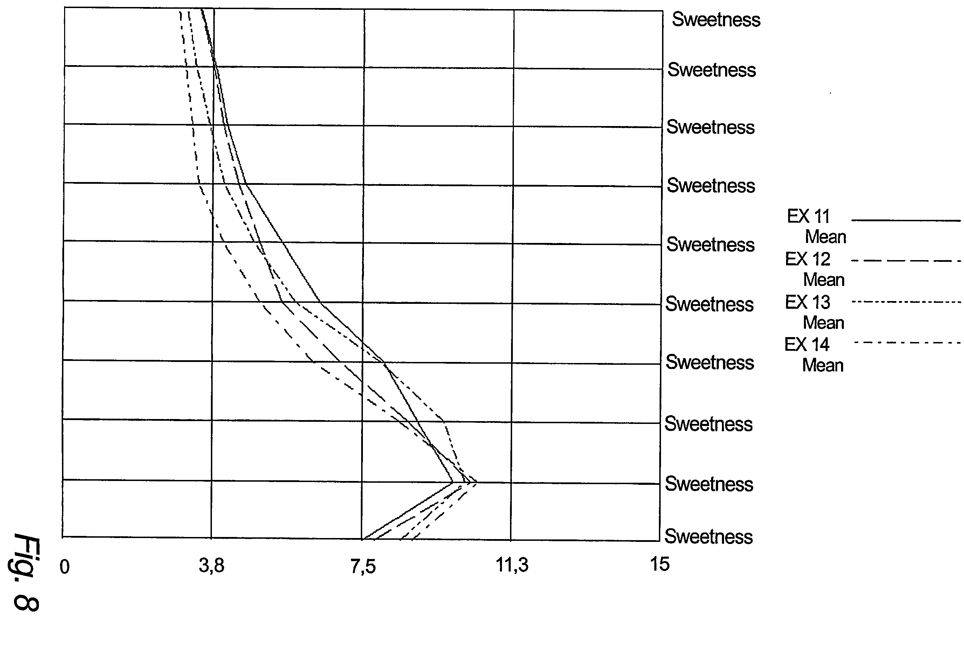

Figure 5 - 8 are illustrating the evaluation of release of the following taste parameters; peppermint, sweetness, flavor intensity and cooling.
Figure 5:
   Ex. 13 exhibits a higher **cooling release** during the first 2 minutes of chewing - indicating, that by the substitution of PVA with a biodegradable polymer in a conventional gum base system, cooling is favored. The other samples are comparable to the conventional gum base system.
Figure 6:
   **Flavor intensity** is favored by the biodegradable polymers in the conventional gum base system primarily in the initial chewing phase. Ex. 13 having a higher flavor intensity during the first 2 minutes of chewing. After the first 2 minutes the flavor is lost and the intensity is reduced to below ex. 11. Ex. 12 follows the ex. 11 in flavor intensity. In ex. 14 (combination of 12 and 13) it can be seen that the LMWE can be used to ajust the loss of flavor intensity caused by the substituting PVA with a biodegradable resin in the last period of chewing.

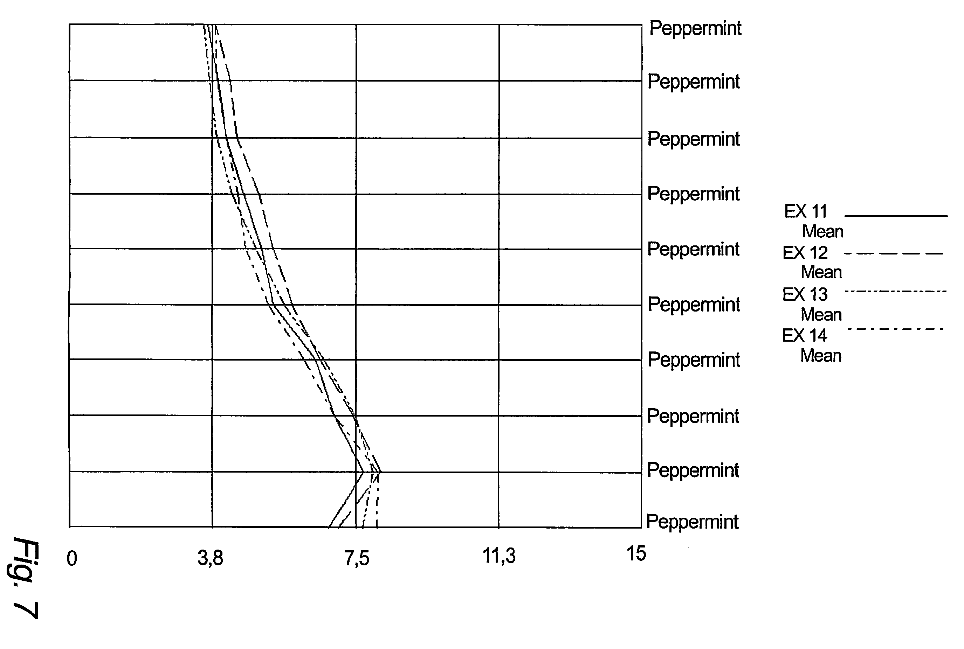

Fig. 7 illustrates the release of peppermint
   **Release of peppermint** is highest in the examples containing biodegradable polymers in the initial chewing phase.
   Ex. 12 contains the LMWE biodegradable polymer account for the highest peppermint release during the mediate and final chewing phase.
Figure 8:
   As described in ex. 6-10, figure 4 illustrates that sweetness is released very instantly in systems containing biodegradable polymers being more hydrophilic than conventional gum base polymers. However by increasing the molecular weight and i.e. the viscosity of the polymer the sweetness release can be prolonged in order to match the release of a conventional gum base system.

In summary, it has been demonstrated that the release of ingredients may be adjusted by variation of the molecular weight of the applied biodegradable polymer or polymers. Moreover, it has also been established, that adding of polymers having a certain predetermined ingredient release profile may in fact modify the final complete chewing gum release profile.

### EXAMPLE 15-18

### Sensory profile of conventional and biodegradable chewing gum containing flavor.

| Ex | Gum base | Polymer 1 | Polymer 2 | Polymer 3 | Chewing gum |
|---|---|---|---|---|---|
| 15 | 100% biodegradable gum base | Elastomer according to example 3 | Elastomer according to example 2b | Polymer according to example 1 | Strawberry (2% flavor) |
| 16 | 100% biodegradable gum base | Elastomer according to example 3 | Elastomer according to example 2b | Polymer according to example 1 | Strawberry (1% flavor) |
| 17 | 100% biodegradable gum base | Elastomer according to example 3 | Elastomer according to example 2b | Polymer according to example 1 | Strawberry (1% flavor plus 0.5% triacetine) |

| | | | | | |
|---|---|---|---|---|---|
| Strawberry refers to the formulations specified in example 5. Sorbitol is used to adjust to 100%. | | | | | |

The three chewing gum samples were tested by serving them to the sensory panellists in tasting booths made in accordance with ISO 8598 standards at room temperature in 40 ml tasteless plastic cups with randomised 3-figure codes. Test samples were evaluated each 10 seconds in 290 seconds. Between each sample tested, the panellists were allowed a break of 3 minutes. Every test is repeated.

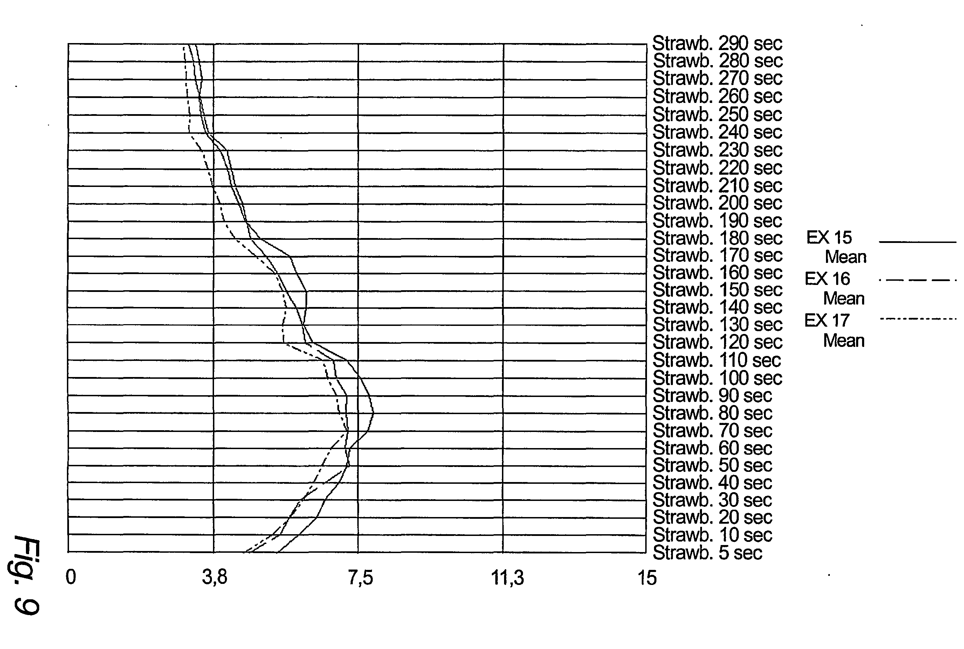

Figure 9 is illustrating the strawberry release as a function of time. It can be seen that although the amount of strawberry have been reduced to the half of the amount in ex. 16 and ex. 17 compared to ex. 15 it does not affect the in-vivo experience when chewing the samples. In ex. 17 additional 0.5% of triacetine has been added in order to ajust the viscosity to ex. 15, as reduction of flavor results in higher viscosity of the gum and reduced flavor release. It can be concluded from figure 9 that it is possible to reduce the amount of chewing gum ingredients, such as flavoring agents or active ingredients in biodegradable chewing gums comprising at least one biodegradable polymer, wherein the molecular weight of said biodegradable polymer is at least 105000 g/mol (Mn).

This may indicate that the provided flavor release is at a level where human beings are not able or less able to detect any differences as gustatory bud is saturated with flavor.

Solubility parameters can be applied to explain release and release rates of the water-insoluble ingredients in chewing.

The solubility can be expressed as Δδ=(δ1-δ2) where δ= (E/V). E= the cohesive energy and V= molar volume.

If the Δδ is less than 2, solubility can be expected between a solvent (here:flavor) and a polymer according to US 5,429,827 hereby incorporated by reference. Materials having similar solubility parameters reach thermodynamically equilibrium when mixed and to the contrary, materials having dissimilar solubility parameters reach equilibrium when separated.

In table 1 the solubility parameters are listed for the polymeric substances used in conventional chewing gums and in biodegradable chewing gums. The solubility parameters listed are according to Hildebrand and Scoot i.e. based on cohesion energy density, which applies for nonpolar molecules and where the degree of hydrogen bonding is insignificant.

### TABLE 1

**Table 1: Solubility parameters of chewing gum components.**

| Product | δ (J/m3) |
|---|---|
| Resin substitute (97DL-lactide/3CAP) | 22.7 |
| Elastomer substitute (LM) (60CAP/40TMC) | 21.1 |
| Elastomer substitute (HM) (60CAP/33VAL/7TMC) | 20.9 |
| PIB | 16.0 |
| Butyl | 16.0 |
| PVA | 19.1 |
| Strawberry flavor | 15.9 |
| Peppermint | 16.8 |

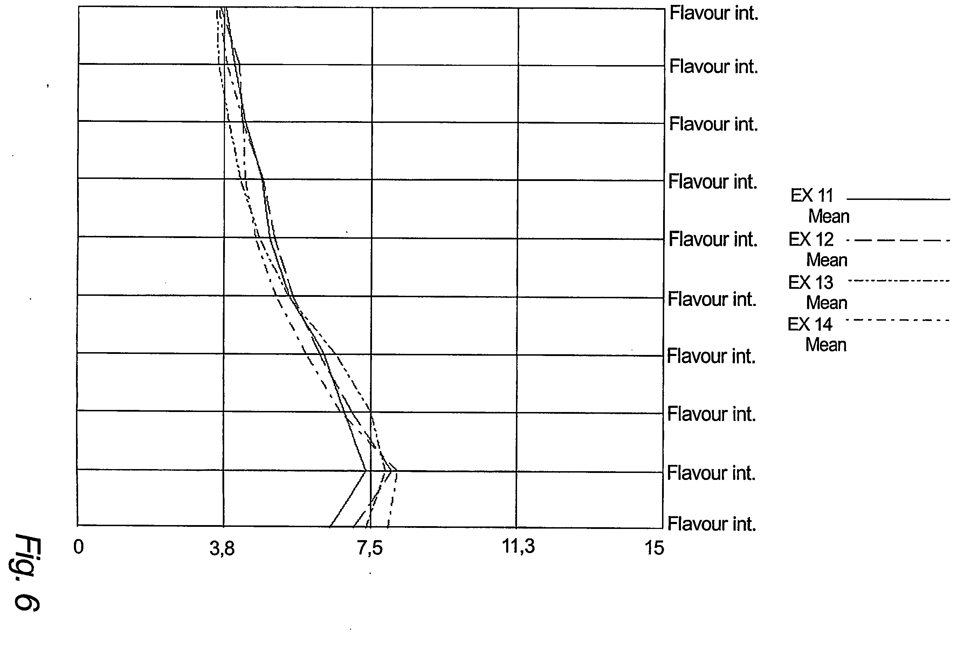

From Table 1 it can be seen that Δδ between flavor and biodegradable polymers versus flavor and conventional polymers for gum bases (Butyl, PIB and PVA) is higher, indicating that flavors in the 100% biodegradable system tend to release faster and in higher quantities.
By combining biodegradable polymers with conventional gum base polymers as described in figure 6 and 7 it is possible to formulate systems having the desired properties obtained from the different polymers i.e. getting an instant release combined with a long lasting flavor release.

### EXAMPLE 18-20

### Sensory profile of conventional and biodegradable chewing gum contianing acid

| Ex | Gum base | Polymer 1 | Polymer 2 | Polymer 3 | Chewing gum |
|---|---|---|---|---|---|
| 18 | 100% biodegradable gum base | Elastomer according to example 3 | Elastomer according to example 2b | Polymer according to example 1 | Strawberry (no flavor added, 1.6 % acids added) |
| 19 | 100% biodegradable gum base | Elastomer according to example 3 | Elastomer according to example 2b | Polymer according to example 1 | Strawberry (no flavor added, 0.8 % acids added) |
| 20 | Standard conventional gum base | Butyl rubber Mn =117.000 | Polyisobuty lene Mn =30.000 | PVA Mn =5000 | Strawberry (no flavor added, 1.6 % acids added) |

| | | | | | |
|---|---|---|---|---|---|
| Strawberry refers to the formulations specified in example 5. Sorbitol is added in order to adjust to 100%. | | | | | |

The three chewing gum samples were tested by serving them to the sensory panellists in tasting booths made in accordance with ISO 8598 standards at room temperature in 40 ml tasteless plastic cups with randomised 3-figure codes. Test samples were evaluated every 10 seconds in 230 seconds. Between each sample tested, the panellist were allowed a break of 3 minutes. Every test is repeated.

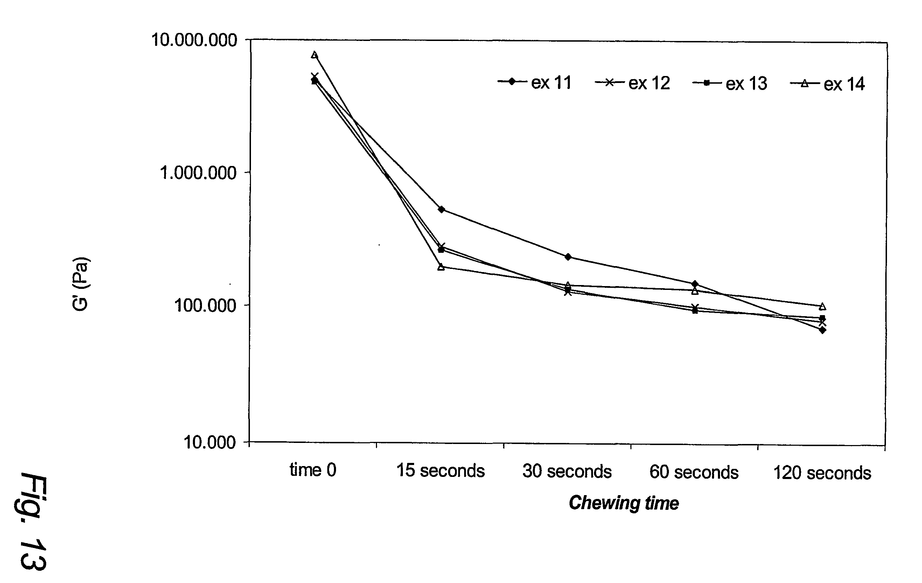

Figure 10 is illustrating release of acids as a function of time. Ex. 20 being the conventional gum base system releases acids faster in the early initial phase and with a lower intensity compared to ex. 18 and ex. 19 being the biodegradable gum base systems containing acids. The release of acids in both ex. 18 and 19 are slower as a result of the higher storage modulus (G') of the biodegradable chewing gums in the very early initial phase (see figure 13) and it is obvious to recognize that reduction of acids in ex. 19 reduces the acid release comparable. The higher storage modulus (G') of these samples makes it more difficult physically to incorporate saliva into the chewing gums. Looking at the total release of acids (area below the curves) it can be seen that ex. 18 releases more acids than ex. 20 due the more hydrophilic nature of the biodegradable chewing gum as more saliva is chewed into the chewing gum resulting in a higher total release of acids.

### EXAMPLE 21-22

### Chewing gum formulations used in ex. 23-63

| Ex | Gum base | Polymer 1 | Polymer 2 | Polymer 3 | Chewing gum |
|---|---|---|---|---|---|
| 21 | Standard conventional gum base | Butyl rubber Mn =117.000 | Polyisobutylene Mn =30.000 | Polyvinylacetate Mn =5000 | Mint |
| 22 | 100% biodegradable gum base | Elastomer according to example 3 | Elastomer according to example 2b | Polymer according to example 1 | Mint |

| | | | | | |
|---|---|---|---|---|---|
| Mint refers to the formulations specified in example 5. | | | | | |

### EXAMPLE 23-63

### Sensory evaluation of conventional and biodegradable chewing gum containing different softeners

**Table 2: Sensory evaluation of conventional and biodegradable chewing gum containing different softeners**

| Ex. | Gum-base ex. | Ingredient added to the chewing gum formulation | Taste evaluation **Sweetness** | Taste eval. **Mint** | Taste eval. **Cooling** | Taste eval. **Juicy** |
|---|---|---|---|---|---|---|
| 23 | 21 | standard | 2 | 3 | 2 | 2 |
| 24 | 22 | 1% wax | 4 | 4 | 2 | 3 |
| 25 | 22 | 3% wax | 3 | 4 | 2 | 3 |
| 26 | 22 | 1 % lecithin | 4 | 3 | 1 | 3 |
| 27 | 22 | 3% lecithin | 4 | 4 | 3 | 4 |
| 28 | 22 | 3% glycerol | 4 | 3 | 2 | 4 |
| 29 | 22 | 5% glycerol | 4 | 3 | 2 | 4 |
| 30 | 22 | 1% PGE | 4 | 3 | 2 | 4 |
| 31 | 22 | 3% PGE | 4 | 3 | 2 | 4 |
| 32 | 22 | 0,5% triacetin | 3 | 3 | 3 | 3 |
| 33 | 22 | 1 % triacetin | 3 | 3 | 2 | 3 |
| 34 | 21 | 1% wax | 2 | 3 | 2 | 3 |
| 35 | 21 | 3% wax | 3 | 4 | 3 | 2 |
| 36 | 21 | 1% lecithin | 2 | 2 | 1 | 3 |
| 37 | 21 | 3% lecithin | 3 | 4 | 4 | 4 |
| 38 | 21 | 3% glycerol | 2 | 2 | 1 | 2 |
| 39 | 21 | 5% glycerol | 3 | 3 | 2 | 2 |
| 40 | 21 | 1% PGE | 2 | 3 | 2 | 2 |
| 41 | 21 | 3% PGE | 4 | 4 | 3 | 3 |
| 42 | 21 | 0,5% triacetin | 2 | 2 | 1 | 2 |
| 43 | 21 | 1% triacetin | 3 | 3 | 2 | 3 |
| 44 | 22 | Bio standard | 3 | 2 | 1 | 3 |
| 45 | 22 | 2% wax | 3 | 3 | 1 | 3 |
| 46 | 22 | 4% wax | 4 | 3 | 2 | 4 |
| 47 | 22 | 2% fat | 3 | 4 | 2 | 3 |
| 48 | 22 | 3% fat | 3 | 4 | 2 | 4 |
| 49 | 22 | 4% fat | 3 | 4 | 2 | 4 |
| 50 | 22 | 5% fat | 3 | 4 | 3 | 4 |
| 51 | 22 | 3% wax | 3 | 3 | 2 | 4 |
| | | 1% lecithin | | | | |
| 52 | 22 | 3% wax | 3 | 4 | 2 | 4 |
| | | 2% lecithin | | | | |
| 53 | 22 | 3% wax | 3 | 3 | 3 | 3 |
| | | 3% glycerol | | | | |
| 54 | 22 | 3% wax | 3 | 4 | 3 | 2 |
| | | 1% triacetin | | | | |
| 55 | 22 | 3% wax | 4 | 3 | 2 | 4 |
| | | 1% lecithin | | | | |
| | | 1% glycerol | | | | |
| | | 1% triacetin | | | | |
| 56 | 30% Talc | 3% wax | 4 | 3 | 2 | 2 |
| | 70% ex. 22 | | | | | |
| 57 | 22 | 12% talc | 4 | 3 | 3 | 4 |
| | | 1% triacetin | | | | |
| 58 | 22 | 12% talc | 4 | 3 | 3 | 4 |
| | | 5% glycerol | | | | |
| 59 | 22 | 12% talc | 4 | 3 | 4 | 3 |
| | | 3% lecithin | | | | |
| 60 | 22 | 12% talc | 4 | 3 | 2 | 4 |
| | | 4% wax | | | | |
| 61 | 22 | 12% talc | 3 | 3 | 2 | 4 |
| | | 5% mono-di | | | | |
| 62 | 22 | 12% talc | 4 | 3 | 2 | 4 |
| | | 1%triacetine | | | | |
| | | 1% glycerol | | | | |
| | | 1% lecithin | | | | |
| 63 | 22 | 12% talc | 4 | 3 | 2 | 4 |
| | | 4% fat | | | | |

In table 2 a number of formulations are evaluated according to sweetness, peppermint, cooling and juiciness. Ex. 23 and 44 are formulations based on conventional gum base polymers and biodegradable gum base polymers, respectively. Ex. 44 is evaluated to be the most sweet and juicy of the two. Adding different types of softeners to the two (ex. 23 and ex. 44) is resulting in chewing gums with increased juiciness and sweetness - i.e. system are reacting in the same manner on the addition of softeners, however the biodegradable systems are evaluated to be more juicy and sweet. Sweetener being a water soluble ingredient is released faster in the more hydrophilic biodegradable gum base system compared to the more hydrophobic conventional gum base system, as saliva is transported faster into the hydrophilic system dissolving the sweetener.

### EXAMPLE 64-65

### Release of nicotine from conventional medical chewing gum formulation compared to an improved biodegradable medical chewing gum formulation.

| Ex | Gum base | Polymer 1 | Polymer 2 | Polymer 3 | Chewing gum |
|---|---|---|---|---|---|
| 64 | Conventional medical gum base | 10% Butyl rubber Mn =117.000 | 20% Polyisobutylene Mn =30.000 | 45% Polyvinylacetate Mn =5000 and natural resins | Nicotine |
| 65 | Improved biodegradable medical gum base | 10% Butyl rubber Mn =117.000 | 20% Polyisobutylene Mn =30.000 | 45% Polymer according to example 1 | Nicotine |

In ex. 64 and 65 conventional medical gum base formulation and biodegradable medical gum base formulation were mixed in a one step. Chewing gum was formulated with 2 mg nicotine. The release of nicotine was measured by in vivo.

In vivo release of chewing gums are evaluated according to following scale:

| Level | Description | Level of nicotine |
|---|---|---|
| 1 | good | nothing |
| 2 | good, but | very weak |
| 3 | acceptable | "perceptible"- tolerably |
| 4 | unacceptable | strong, unpleasant, difficult to tolerate |
| 5 | totally unacceptable | to strong, -cannot tolerate |

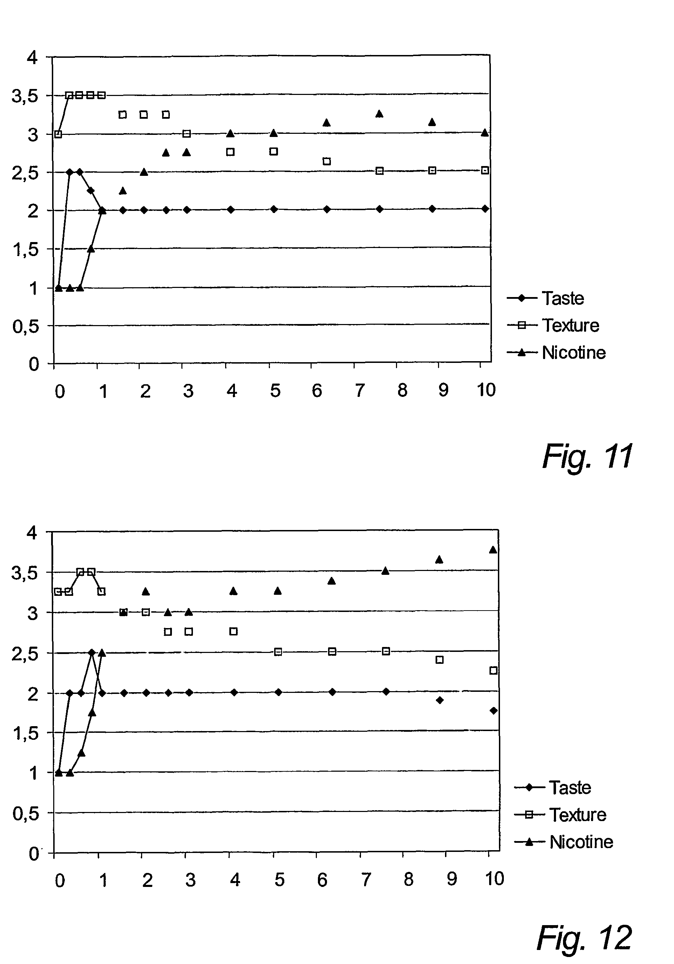

Figure 11 and 12 shows the release of nicotine, texture and taste measured in vivo and. It appears that the release of nicotine of the chewing gums made in accordance with the present invention are matching each other, making the biodegradable medical formulation suitable for medical applications.

### EXAMPLE 66

### Chewing profiles

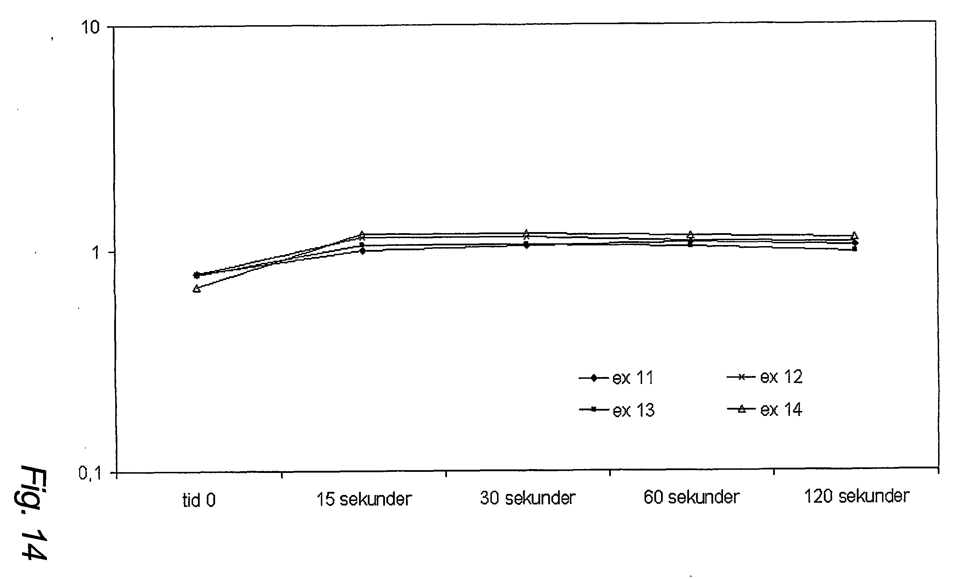

Figure 13 and 14 are illustrating rheological chewing profiles of the chewing gum corresponding to example 11-14.The gum centres were chewed in a chewing machine (CF Jansson). The chewing frequency was set to 1 Hz, a pH buffer was used as saliva and the temperature was set at 37°C. The chewing time was set to 15 seconds, 30 seconds, 60 seconds and 120 seconds. After chewing, the chewed cud was measured on a rheometer, type AR1000 from TA Instruments in a frequency scan. The results from these measurements can be seen on figure 13 and 14 wherein the storage modulus (G') and tan(δ) versus chewing time is depicted illustrating the texture changes during chewing.

It appears clearly of the in figure 13 and 14, that all the chewing gums containing biodegradable polymers (ex. 12-14) are having textures comparable to that of conventional chewing gum in ex. 11. However regarding the initial chew the biodegradable chewing gums are harder due to better attraction between the phases consisting of the sweetener and the more hydrophilic biodegradable gum bases compared to the attraction between the phases consisting of the sweetener and the more hydrophobic conventional gum bases. But within very short chewing time (less that 15 seconds) the texture of the biodegradable chewing gums becomes softer, as saliva is incorporated into the gum.
Actually, the texture of the chewing gums containing biodegradable polymers has an improved texture, as the texture described by G'and tan(δ) is more uniform as a function of time (after 15 seconds. of chewing).

## Claims

1. Chewing gum comprising
at least one biodegradable polyester copolymer obtained by the polymerization of two or more cyclic esters by ring-opening
said at least one biodegradable polyester copolymer having a molecular weight of less than 150000 g/mol (Mn) and said chewing gum further comprising chewing gum ingredients, wherein the chewing gum is free of non-biodegradable polymers.

2. Chewing gum according to claim 1, wherein said at least one biodegradable polyester copolymer has a molecular weight of less than 125000 g/mol (Mn).

3. Chewing gum according to claim 1 or 2,
wherein said at least one biodegradable polyester copolymer has a molecular weight of less than 10000 g/mol (Mn).

4. Chewing gum according to any of claims 1-3,
wherein said at least one biodegradable polyester copolymer has a molecular weight of less than 6000 g/mol (Mn).

5. Chewing gum according to any of claims 1-4, wherein said chewing gum comprises at least two different biodegradable polyester copolymers.

6. Chewing gum according to any of claims 1-5, wherein
said chewing gum ingredients comprise flavoring agents.

7. Chewing gum according to claim 6, wherein
said flavoring agents comprise natural and synthetic flavorings in the form of natural vegetable components, essential oils, essences, extracts, powders, including acids and other substances capable of affecting the taste profile

8. Chewing gum according to claim 6 or 7, wherein
said chewing gum comprises flavor in the amount of 0.01 to 30 wt %, said percentage being based on the total weight of the chewing gum

9. Chewing gum according to claim 8, wherein
said chewing gum comprises flavor in an amount of 0.2 to 4 wt %, said percentage being based on the total weight of the chewing gum

10. Chewing gum according to claim 8 or 9, wherein
said flavor comprises water soluble ingredients.

11. Chewing gum according to claim 10, wherein
said water soluble ingredients comprise acids.

12. Chewing gum according to claim 8 or 9, wherein
said flavor comprises water insoluble ingredients.

13. Chewing gum according to any of claims 1-12, wherein
said chewing gum ingredients comprise sweeteners.

14. Chewing gum according to claim 13,
wherein said sweeteners comprise bulk sweeteners

15. Chewing gum according to claim 14,
wherein the chewing gum comprises bulk sweeteners in an amount of 5 to 95% by weight of the chewing gum, more typically 20 to 80% by weight of the chewing gum.

16. Chewing gum according to claim 13, wherein said sweeteners comprise high intensity sweeteners

17. Chewing gum according to claim 16, wherein the high intensity sweeteners comprise sucralose, aspartame, salts of acesulfame, alitame, saccharin and its salts, cyclamic acid and its salts, glycyrrhizin, dihydrochalcones, thaumatin, monellin, sterioside, alone or in combination

18. Chewing gum according to any of claims 1-17,
wherein the chewing gum comprises high intensity sweeteners in an amount of 0 to 1% by weight of the chewing gum, more typically 0.05 to 0.5 % by weight of the chewing gum.

19. Chewing gum according to any of claims 1-18,
wherein the chewing gum comprises at least one softener.

20. Chewing gum according to claim 19,
wherein the at least one softener comprises tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids - such as stearic, palmitic, oleic and linoleic acids mixtures thereof.

21. Chewing gum according to any of claims 1- 20, wherein said chewing gum ingredients comprise active ingredients.

22. Chewing gum according to claim 21, wherein
said active ingredients are selected from the group of: Acetaminophen, Acetyl salicylic acid Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminium salts, Calcium salts, Ferro salts, Silver salts, Zinc-salte, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B 12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and or Ratinidine or derivates and mixtures thereof

23. Chewing gum according to any of claims 1-22, wherein the at least two or more cyclic esters are selected from the groups of glycolides, lactides, lactones, cyclic carbonates or mixtures thereof.

24. Chewing gum according to claim 23, wherein said lactones are chosen from the group of ε-caprolactone, δ-valerolactone, γ-butyrolactone, β-propiolactone and ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom.

25. Chewing gum according to claim 23,
wherein said cyclic carbonates are derived from carbonate monomers selected from the group of trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

26. Chewing gum according to any of claims 1-25,
wherein the chewing gum comprises filler.

27. Chewing gum according to claim 26,
wherein the chewing gum comprises filler in an amount of 10 to 40 % by weight of the chewing gum.

28. Chewing gum according to any of claims 1-27,
wherein the chewing gum comprises at least one coloring agent.

29. Chewing gum according to any of claims 1-28, wherein said chewing gum comprises
at least one biodegradable elastomer in the amount of 0.5 to 70% wt of the chewing gum,
at least one biodegradable plasticizer in the amount of 0.5 to 70% wt of the chewing gum and
at least one chewing gum ingredient chosen from the groups of softeners, sweeteners, flavoring agents, active ingredients and fillers in the amount of 2 to 80% wt of the chewing gum.

30. Gum base comprising
at least one biodegradable polyester copolymer obtained by the polymerization of two or more cyclic esters by ring-opening
said at least one biodegradable polyester copolymer having a molecular weight of less than 150000 g/mol (Mn), wherein the gum base is free of non-biodegradable polymers.

## Patentansprüche

1. Kaugummi, umfassend
mindestens ein biologisch abbaubares Polyester-Copolymer, welches durch die Polymerisation von zwei oder mehreren cyclischen Estern durch Ringöffnung erhalten worden ist,
wobei das mindestens eine biologisch abbaubare Polyester-Copolymer ein Molekulargewicht von weniger als 150000 g/mol (Mn) aufweist und der Kaugummi des Weiteren Kaugummibestandteile umfasst, wobei der Kaugummi frei von nicht biologisch abbaubaren Polymeren ist.

2. Kaugummi nach Anspruch 1, wobei das mindestens eine biologisch abbaubare Polyester-Copolymer ein Molekulargewicht von weniger als 125000 g/mol (Mn) aufweist.

3. Kaugummi nach Anspruch 1 oder 2, wobei das mindestens eine biologisch abbaubare Polyester-Copolymer ein Molekulargewicht von weniger als 10000 g/mol (Mn) aufweist.

4. Kaugummi nach einem der Ansprüche 1-3, wobei das mindestens eine biologisch abbaubare Polyester-Copolymer ein Molekulargewicht von weniger als 6000 g/mol (Mn) aufweist.

5. Kaugummi nach einem der Ansprüche 1-4, wobei der Kaugummi mindestens zwei unterschiedliche biologisch abbaubare Polyester-Copolymere umfasst.

6. Kaugummi nach einem der Ansprüche 1-5, wobei die Kaugummibestandteile Geschmacks- oder Aromastoffe umfassen.

7. Kaugummi nach Anspruch 6, wobei die Geschmacks- oder Aromastoffe natürliche und synthetische Aromen in Form von natürlichen pflanzlichen Bestandteilen, ätherischen Ölen, Essenzen, Extrakten, Pulvern, einschließlich Säuren und anderer Substanzen, die in der Lage sind, das Geschmacksprofil zu beeinflussen, umfassen.

8. Kaugummi nach Anspruch 6 oder 7, wobei der Kaugummi Aroma in einer Menge von 0,01 bis 30 Gew.-% umfasst, wobei der Prozentsatz auf dem Gesamtgewicht des Kaugummis basiert.

9. Kaugummi nach Anspruch 8, wobei der Kaugummi Aroma in einer Menge von 0,2 bis 4 Gew.-% umfasst, wobei der Prozentsatz auf dem Gesamtgewicht des Kaugummis basiert.

10. Kaugummi nach Anspruch 8 oder 9, wobei das Aroma wasserlösliche Bestandteile umfasst.

11. Kaugummi nach Anspruch 10, wobei die wasserlöslichen Bestandteile Säuren umfassen.

12. Kaugummi nach Anspruch 8 oder 9, wobei das Aroma in Wasser unlösliche Bestandteile umfasst.

13. Kaugummi nach einem der Ansprüche 1-12, wobei die Kaugummibestandteile Süßungsmittel umfassen.

14. Kaugummi nach Anspruch 13, wobei die Süßungsmittel Bulk- oder Masse-Süßungsmittel umfassen.

15. Kaugummi nach Anspruch 14, wobei der Kaugummi Bulk- oder Masse-Süßungsmittel in einer Menge von 5 bis 95 Gew.-% des Kaugummis, typischererweise 20 bis 80 Gew.-% des Kaugummis umfasst.

16. Kaugummi nach Anspruch 13, wobei die Süßungsmittel hochintensive Süßungsmittel umfassen.

17. Kaugummi nach Anspruch 16, wobei die hochintensiven Süßungsmittel Sucralose, Aspartam, Salze von Acesulfam, Alitam, Saccharin und dessen Salze, Cyclaminsäure und deren Salze, Glycyrrhizin, Dihydrochalcone, Thaumatin, Monellin, Steriosid allein oder in Kombination umfassen.

18. Kaugummi nach einem der Ansprüche 1-17, wobei der Kaugummi hochintensive Süßungsmittel in einer Menge von 0 bis 1 Gew.-% des Kaugummis, typischererweise 0,05 bis 0,5 Gew.-% des Kaugummis umfasst.

19. Kaugummi nach einem der Ansprüche 1-18, wobei der Kaugummi mindestens ein Erweichungsmittel umfasst.

20. Kaugummi nach Anspruch 19, wobei das mindestens eine Erweichungsmittel Talg, hydrierten Talg, hydrierte und teilweise hydrierte pflanzliche Öle, Kakaobutter, Glycerolmonostearat, Glyceroltriacetat, Lecithin, Mono-, Di- und Triglyceride, acetylierte Monoglyceride, Fettsäuren - wie Stearin-, Palmitin-, Öl- und Linolsäuren, Mischungen davon umfasst.

21. Kaugummi nach einem der Ansprüche 1-20, wobei die Kaugummibestandteile Wirkstoffe umfassen.

22. Kaugummi nach Anspruch 21, wobei die Wirkstoffe aus der Gruppe von:
Acetaminophen, Acetylsalicylsäure, Buprenorphin, Bromhexin, Celcoxib, Codein, Diphenhydramin, Diclofenac, Etoricoxib, Ibuprofen, Indometacin, Ketoprofen, Lumiracoxib, Morphin, Naproxen, Oxycodon, Parecoxib, Piroxicam, Pseudoephedrin, Rofecoxib, Tenoxicam, Tramadol, Valdecoxib, Calciumcarbonat, Magaldrat, Disulfiram, Bupropion, Nicotin, Azithromycin, Clarithromycin, Clotrimazol, Erythromycin, Tetracyclin, Granisetron, Ondansetron, Prometazin, Tropisetron, Brompheniramin, Ceterizin, leco-Ceterizin, Chlorcyclizin, Chlorpheniramin, Chlorpheniramin, Diphenhydramin, Doxylamin, Fenofenadin, Guaifenesin, Loratidin, des-Loratidin, Phenyltoloxamin, Promethazin, Pyridamin, Terfenadin, Troxerutin, Methyldopa, Methylphenidat, Benzalkoniumchlorid, Benzethoniumchlorid, Cetylpyridiniumchlorid, Chlorhexidin, Ecabet-Natrium, Haloperidol, Allopurinol, Colchinin, Theophyllin, Propanolol, Prednisolon, Prednison, Fluorid, Harnstoff, Miconazol, Actot, Glibenclamid, Glipizid, Metformin, Miglitol, Repaglinid, Rosiglitazon, Apomorphin, Cialis, Sildenafil, Vardenafil, Diphenoxylat, Simethicon, Cimetidin, Famotidin, Ranitidin, Ratinidin, Cetrizin, Loratadin, Aspririn, Benzocain, Dextrometorphan, Ephedrin, Phenylpropanolamin, Pseudoephedrin, Cisaprid, Domperidon, Metoclopramid, Acyclovir, Dioctylsulfosuccinat, Phenolphthalein, Almotriptan, Eletriptan, Ergotamin, Migea, Naratriptan, Rizatriptan, Sumatriptan, Zolmitriptan, Aluminiumsalzen, Calciumsalzen, Eisen(II)-salzen, Silbersalzen, Zinksalzen, Amphotericin B, Chlorhexidin, Miconazol, Triamcinolonacetonid, Melatonin, Phenobarbitol, Koffein, Benzodiazepin, Hydroxyzin, Meprobamat, Phenothiazin, Buclizin, Brometazin, Cinnarizin, Cyclizin, Diphenhydramin, Dimenhydrinat, Buflomedil, Amphetamin, Koffein, Ephedrin, Orlistat, Phenylephedrin, Phenylpropanolamin, Pseudoephedrin, Sibutramin, Ketoconazol, Nitroglycerin, Nystatin, Progesteron, Testosteron, Vitamin B12, Vitamin C, Vitamin A, Vitamin D, Vitamin E, Pilocarpin, Aluminiumaminoacetat, Cimetidin, Esomeprazol, Famotidin, Lansoprazol, Magnesiumoxid, Nizatid und/oder Ratinidin oder Derivaten und Mischungen davon ausgewählt sind.

23. Kaugummi nach einem der Ansprüche 1-22, wobei die mindestens zwei oder mehreren cyclischen Ester aus den Gruppen von Glycoliden, Lactiden, Lactonen, cyclischen Carbonaten oder Mischungen davon ausgewählt sind.

24. Kaugummi nach Anspruch 23, wobei die Lactone aus der Gruppe von ε-Caprolacton, δ-Valerolacton, γ-Butyrolacton, β-Propiolacton und ε-Caprolactonen, δ-Valerolactonen, γ-Butyrolactonen oder β-Propiolactonen, die mit einem oder mehreren Alkyl- oder Arylsubstituenten an jeglichen nicht-Carbonyl-Kohlenstoffatomen entlang des Rings substituiert worden sind, einschließlich Verbindungen, in denen zwei Substituenten an ein und demselben Kohlenstoffatom enthalten sind, ausgewählt sind.

25. Kaugummi nach Anspruch 23, wobei die cyclischen Carbonate von Carbonat-Monomeren, ausgewählt aus der Gruppe von Trimethylencarbonat, 5-Alkyl-1,3-dioxan-2-on, 5,5-Dialkyl-1,3-dioxan-2-on oder 5-Alkyl-5-alkyloxycarbonyl-1,3-dioxan-2-on, Ethylencarbonat, 3-Ethyl-3-hydroxymethyl, Propylencarbonat, Trimethylolpropanmonocarbonat, 4,6-Dimethyl-1,3-propylencarbonat, 2,2-Dimethyltrimethylencarbonat und 1,3-Dioxepan-2-on, und Mischungen davon abgeleitet sind.

26. Kaugummi nach einem der Ansprüche 1-25, wobei der Kaugummi Füllstoff umfasst.

27. Kaugummi nach Anspruch 26, wobei der Kaugummi Füllstoff in einer Menge von 10 bis 40 Gew.-% des Kaugummis umfasst.

28. Kaugummi nach einem der Ansprüche 1-27, wobei der Kaugummi mindestens ein Färbemittel umfasst.

29. Kaugummi nach einem der Ansprüche 1-28, wobei der Kaugummi
mindestens ein biologisch abbaubares Elastomer in einer Menge von 0,5 bis 70 Gew.-% des Kaugummis,
mindestens einen biologisch abbaubaren Weichmacher in einer Menge von 0,5 bis 70 Gew.-% des Kaugummis und
mindestens einen Kaugummibestandteil, ausgewählt aus den Gruppen von Erweichungsmitteln, Süßungsmitteln, Geschmack- und Aromastoffen, Wirkstoffen und Füllstoffen, in einer Menge von 2 bis 80 Gew.-% des Kaugummis umfasst.

30. Gummigrundlage, umfassend
mindestens ein biologisch abbaubares Polyester-Copolymer, welches durch die Polymerisation von zwei oder mehreren cyclischen Estern durch Ringöffnung erhalten worden ist,
wobei das mindestens eine biologisch abbaubare Polyester-Copolymer ein Molekulargewicht von weniger als 150000 g/mol (Mn) aufweist, wobei die Gummigrundlage frei von nicht biologisch abbaubaren Polymeren ist.

## Revendications

1. Gomme à mâcher comprenant
au moins un copolymère de polyester biodégradable obtenu par la polymérisation de deux ou plusieurs esters cycliques par ouverture de cycle
ledit au moins un copolymère de polyester biodégradable ayant une masse moléculaire inférieure à 150000 g/mol (Mn) and ladite gomme à mâcher comprenant en outre des ingrédients de gomme à mâcher, où la gomme à mâcher est dépourvue de polymères non biodégradables.

2. Gomme à mâcher selon la revendication 1, où ledit au moins un copolymère de polyester biodégradable a une masse moléculaire inférieure à 125000 g/mol (Mn).

3. Gomme à mâcher selon la revendication 1 ou 2,
où ledit au moins un copolymère de polyester biodégradable a une masse moléculaire inférieure à 10000 g/mol (Mn).

4. Gomme à mâcher selon l'une quelconque des revendications 1-3,
où ledit au moins un copolymère de polyester biodégradable a une masse moléculaire inférieure à 6000 g/mol (Mn).

5. Gomme à mâcher selon l'une quelconque des revendications 1-4, où ladite gomme à mâcher comprend au moins deux copolymères de polyester biodégradables différents.

6. Gomme à mâcher selon l'une quelconque des revendications 1-5, où lesdits ingrédients de gomme à mâcher comprennent des agents aromatisants.

7. Gomme à mâcher selon la revendication 6, où
lesdits agents aromatisants comprennent des aromatisants naturels et synthétiques sous forme de composants végétaux naturels, d'huiles essentielles, d'essences, d'extraits, de poudres, incluant des acides et d'autres substances capables d'affecter le profil de goût.

8. Gomme à mâcher selon la revendication 6 ou 7, où
ladite gomme à mâcher comprend un arôme en la quantité de 0,01 to 30 % en poids, ledit pourcentage étant basé sur le poids total de la gomme à mâcher.

9. Gomme à mâcher selon la revendication 8, où
ladite gomme à mâcher comprend un arôme en une quantité de 0,2 to 4 % en poids, ledit pourcentage étant basé sur le poids total de la gomme à mâcher.

10. Gomme à mâcher selon la revendication 8 ou 9, où
ledit arôme comprend des ingrédients solubles dans l'eau.

11. Gomme à mâcher selon la revendication 10, où
lesdits ingrédients solubles dans l'eau comprennent des acides.

12. Gomme à mâcher selon la revendication 8 ou 9, où
ledit arôme comprend des ingrédients insolubles dans l'eau.

13. Gomme à mâcher selon l'une quelconque des revendications 1-12, où
lesdits ingrédients de gomme à mâcher comprennent des édulcorants.

14. Gomme à mâcher selon la revendication 13, où
lesdits édulcorants comprennent des édulcorants de charge.

15. Gomme à mâcher selon la revendication 14,
où la gomme à mâcher comprend des édulcorants de charge en une quantité de 5 à 95% en poids de la gomme à mâcher, plus typiquement 20 à 80% en poids de la gomme à mâcher.

16. Gomme à mâcher selon la revendication 13, où lesdits édulcorants comprennent des édulcorants à haute intensité.

17. Gomme à mâcher selon la revendication 16, où les édulcorants à haute intensité comprennent le sucralose, l'aspartame, les sels d'acésulfame, l'alitame, la saccharine et ses sels, l'acide cyclamique et ses sels, la glycyrrhizine, les dihydrochalcones, la thaumatine, la monelline, le stérioside, seuls ou en combinaison.

18. Gomme à mâcher selon l'une quelconque des revendications 1-17,
où la gomme à mâcher comprend des édulcorants à haute intensité en une quantité de 0 à 1% en poids de la gomme à mâcher, plus typiquement 0,05 à 0,5 % en poids de la gomme à mâcher.

19. Gomme à mâcher selon l'une quelconque des revendications 1-18,
où la gomme à mâcher comprend au moins un ramollissant.

20. Gomme à mâcher selon la revendication 19,
où le au moins un ramollissant comprend du suif, du suif hydrogéné, des huiles végétales hydrogénées et partiellement hydrogénées, du beurre de cacao, du monostéarate de glycérol, du triacétate de glycérol, de la lécithine, des mono-, di- and triglycérides, des monoglycérides acétylés, des acides gras - comme les acides stéarique, palmitique, oléique et linoléique et leurs mélanges.

21. Gomme à mâcher selon l'une quelconque des revendications 1- 20, où lesdits ingrédients de gomme à mâcher comprennent des ingrédients actifs.

22. Gomme à mâcher selon la revendication 21, où
lesdits ingrédients actifs sont choisis dans le groupe de: Acétaminophène, Acide acétylsalicylique Buprénorphine Bromhexine Celcoxib Codéine, Diphenhydramine, Diclofénac, Etoricoxib, Ibuprofène, Indométacine, Ketoprofène, Lumiracoxib, Morphine, Naproxen, Oxycodon, Parecoxib, Piroxicam, Pseudoéfédrine, Rofecoxib, Tenoxicam, Tramadol, Valdecoxib, Carbonate de calcium, Magaldrate, Disulfiram, Bupropion, Nicotine, Azithromycine, Clarithromycine, Clotrimazole, Erythromycine, Tétracycline, Granisetron, Ondansetron, Prométazine, Tropisetron, Bromphéniramine, Cétérizine, leco-Cétérizine, Chlorcyclizine, Chlorphéniramine, Chlorphéniramine, Difenhydramine, Doxylamine, Fénofénadine, Guaifénésine, Loratidine, des-Loratidine, Phényltoloxamine, Prométhazine, Pyridamine, Terfénadine, Troxérutine, Méthyldopa, Méthylphénidate, Benzalcon. Chlorure, Benzeth. Chlorure, Cétylpyrid. Chlorure, Chlorhexidine, Ecabet-sodium, Halopéridol, Allopurinol, Colchinine, Théophylline, Propanolol, Prednisolone, Prednisone, Fluorure, Urée, Miconazole, Actot, Glibenclamide, Glipizide, Metformine, Miglitol, Repaglinide, Rosiglitazone, Apomorfine, Cialis, Sildénafil, Vardénafil, Diphénoxylate, Siméthicone, Cimétidine, Famotidine, Ranitidine, Ratinidine, cétrizine, Loratadine, Aspirine, Benzocaïne, Dextrométorphan, Ephédrine, Phénylpropanolamine, Pseudoéphédrine, Cisapride, Dompéridone, Métoclopramide, Acyclovir, Dioctylsulfosucc., Phénolphtaléine, Almotriptan, Eletriptan, Ergotamine, Migea, Naratriptan, Rizatriptan, Sumatriptan, Zolmitriptan, Sels d'aluminium, Sels de calcium, Sels de fer, Sels d'argent, Sels de zinc, Amphotéricine B, Chlorhexidine, Miconazole, Triamcinolonacétonide, Mélatonine, Phénobarbitol, Caféine, Benzodiazépine, Hydroxyzine, Méprobamate, Phénothiazine, Buclizine, Brométazine, Cinnarizine, Cyclizine, Difenhydramine, Dimenhydrinate, Buflomedil, Amphétamine, Caféine, Ephédrine, Orlistat, Phényléphédrine, Phénylpropanolamine, Pseudoéphédrine, Sibutramine, Kétoconazole, Nitroglycérine, Nystatine, Progestérone, Testostérone, Vitamine B12, Vitamine C, Vitamine A, Vitamine D, Vitamine E, Pilocarpine, Aminoacétate d'aluminium, Cimétidine, Esoméprazole, Famotidine, Lansoprazole, Oxydes de magnésium, Nizatide et ou Ratinidine ou leurs dérivés and leurs mélanges.

23. Gomme à mâcher selon l'une quelconque des revendications 1-22, où les au moins deux ou plusieurs esters cycliques sont choisis dans les groupes des glycolides, lactides, lactones, carbonates cycliques ou leurs mélanges.

24. Gomme à mâcher selon la revendication 23, où lesdites lactones sont choisies dans le groupe de ε-caprolactone, δ-valérolactone, γ-butyrolactone, β-propiolactone and ε-caprolactones, δ-valérolactones, γ-butyrolactones, ou β-propiolactones qui ont été substituées avec un ou plusieurs substituants alkyle ou aryle à des atomes de carbone non carbonyles quelconques sur le cycle, y compris les composés dans lesquels deux substituants sont contenus sur le même atome de carbone.

25. Gomme à mâcher selon la revendication 23,
où lesdits carbonates cycliques sont dérivés de monomères carbonates choisis dans le groupe de carbonate de triméthylène, 5-alkyl-1,3-dioxan-2-one, 5,5-dialkyl-1,3-dioxan-2-one ou 5-alkyl-5-alkyloxycarbonyl-1,3-dioxan-2-one, carbonate d'éthylène, carbonate de 3-éthyl-3-hydroxyméthylpropylène, monocarbonate de triméthylolpropane, carbonate de 4,6-diméthyl-1,3-propylène, carbonate de 2,2-diméthyltriméthylène, et 1,3-dioxépan-2-one et leurs mélanges.

26. Gomme à mâcher selon l'une quelconque des revendications 1-25,
où la gomme à mâcher comprend une charge.

27. Gomme à mâcher selon la revendication 26,
où la gomme à mâcher comprend une charge en une quantité de 10 to 40 % en poids de la gomme à mâcher.

28. Gomme à mâcher selon l'une quelconque des revendications 1-27,
où la gomme à mâcher comprend au moins un agent colorant.

29. Gomme à mâcher selon l'une quelconque des revendications 1-28, où ladite gomme à mâcher comprend
au moins un élastomère biodégradable en la quantité de 0,5 à 70% en poids de la gomme à mâcher,
au moins un plastifiant biodégradable en la quantité de 0,5 à 70% en poids de la gomme à mâcher et
au moins un ingrédient de gomme à mâcher choisi dans les groupes des ramollissants, édulcorants, agents aromatisants, ingrédients actifs et charges en la quantité de 2 à 80 % en poids de la gomme à mâcher.

30. Base de gomme comprenant
au moins un copolymère de polyester biodégradable obtenu par la polymérisation de deux ou plusieurs esters cycliques par ouverture de cycle
ledit au moins un copolymère de polyester biodégradable ayant une masse moléculaire inférieure à 150000 g/mol (Mn), où la base de gomme est dépourvue de polymères non biodégradables.
